## Europäisches Patentamt
## European Patent Office
## Office européen des brevets

(11) Veröffentlichungsnummer: **0 176 765**
**B1**

(12) # EUROPÄISCHE PATENTSCHRIFT

(45) Veröffentlichungstag der Patentschrift:
26.07.89

(51) Int. Cl.⁴: **F 16 M 11/42**

(21) Anmeldenummer: **85110846.4**

(22) Anmeldetag: **28.08.85**

(54) **Film- oder Fernsehkamerastativ.**

(30) Priorität: **19.09.84 DE 3434386**

(43) Veröffentlichungstag der Anmeldung:
**09.04.86 Patentblatt 86/15**

(45) Bekanntmachung des Hinweises auf die Patenterteilung:
**26.07.89 Patentblatt 89/30**

(84) Benannte Vertragsstaaten:
**DE GB IT**

(56) Entgegenhaltungen:
**DE-A- 2 612 409**
**DE-B- 1 078 430**
**DE-B- 1 101 140**
**FR-A- 1 008 537**
**FR-A- 2 319 521**
**US-A- 2 661 672**
**US-A- 3 682 424**

(73) Patentinhaber: **Sachtler Aktiengesellschaft - Kommunikationstechnik, Dieselstrasse 16, D-8046 Garching (DE)**

(72) Erfinder: **Jaumann, Leonhard, Ing.-Grad., Dülferstrasse 115, D-8000 München 50 (DE)**
Erfinder: **Kus, Helmut, Ing.-Grad., Mozartstrasse 107, D-8012 Ottobrunn (DE)**

(74) Vertreter: **Haft, Berngruber, Czybulka, Postfach 14 02 46 Hans-Sachs-Strasse 5, D-8000 München 5 (DE)**

. ACTORUM AG

# Beschreibung

Die Erfindung bezieht sich auf ein Film- oder Fernsehkamerastativ auf einem verfahrbaren Untersatz nach dem Oberbegriff des Patentanspruchs 1.

Derartige Stative, die auch als Pedestal bezeichnet werden, sind bekannt. Diese Stative sind eine nicht zerlegbare Baueinheit, dadurch sperrig und nur schwer transportierbar. Sie werden im Handel von verschiedenen Firmen angeboten.

Ferner ist bereits ein Untersatz oder Dolly mit zusammenklappbaren Armen in Handel. Er weist allerdings keine Zentrallenkung auf, vielmehr ist nur der Radsatz (d.h. normalerweise ein einzelnes Laufrad oder Zwillingsräder) eines der Dollyarme lenkbar, und zwar mit einem Verlängerungsgriff an der diesen Radsatz tragenden Welle, während die anderen Radsätze nicht lenkbar sind. Zur Bedienung dieses Stativs sind mindestens zwei Personen erforderlich, und zwar neben dem Kameramann eine Hilfskraft, die den Dolly schiebt und lenkt.

Aufgabe der Erfindung ist es, ein Stativ oder Pedestal auf einem verfahrbaren Untersatz oder Dolly zu schaffen, der eine Zentrallenkung aufweist und dennoch leicht transportierbar ist, also insbesondere vom Kameramann allein bedient werden kann.

Diese Aufgabe ist gemäss der Erfindung durch die im kennzeichnenden Teil des Patentanspruches 1 angegebenen Merkmale gelöst.

Mit der angegebenen Konstruktion für den Tansmissionsantrieb, vorzugsweise einen Zahnriemen- oder Kettenantrieb zwischen dem Zentralrad im Kernstück des Untersatzes und den Rädern auf den Wellen der Laufradsätze kann nach Abnahme des Statives von dem Untersatz der Untersatz einfach zusammengeklappt und mit geringem Stauraum transportiert werden.

Aus der französischen Patentschrift 1 008 537 ist zwar ein Dreibeinstativ mit einem fahrbaren Untersatz bekannt, bei dem das Stativ von dem Untersatz getrennt und anschliessend der Untersatz zusammengeklappt werden kann, indem zumindest zwei Arme um zur Mittelsäule des Statives parallele Achsen an den dritten Arm angeklappt werden können. Eine Lenkung der Laufräder dieses Statives ist hier jedoch nicht vorgesehen.

Nachstehend ist eine Ausführungsform der Erfindung anhand der Zeichnung näher erläutert. Darin zeigen:

Fig. 1 in schematischer, perspektivischer Wiedergabe ein Film- oder Fernsehkamerastativ auf einem verfahrbaren Untersatz;

Fig. 2 in schematischer Wiedergabe eine Draufsicht auf die im zentralen Kernstück des Untersatzes angeordneten Teile der Zentrallenkung;

Fig. 3 einen senkrechten Schnitt durch einen Teil des zentralen Kernstücks des Untersatzes;

und

Fig. 4 einen senkrechten Schnitt durch denjenigen Teil des Untersatzes, an dem einer der klappbaren Arme angelenkt ist.

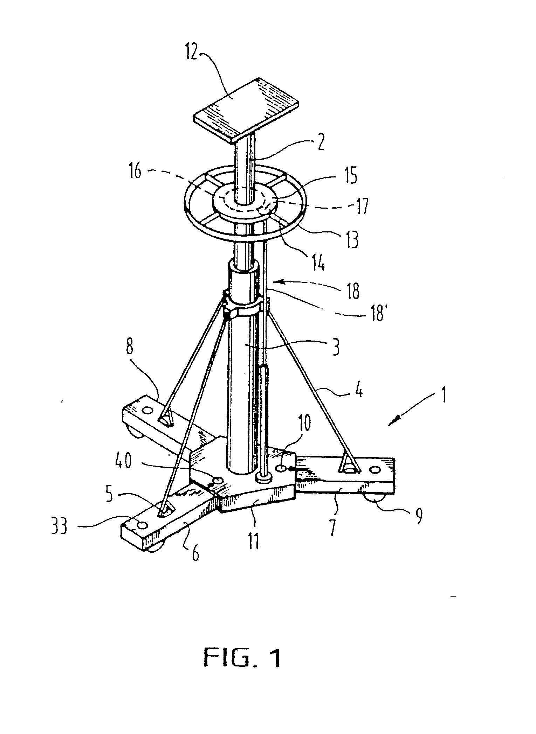

Gemäss Figur 1 ist ein Stativ oder ein Pedestal für eine Film- oder Fernsehkamera auf einem Untersatz oder einem Dolly 1 angeordnet. Das Stativ weist dabei eine vertikale Mittelsäule 2 auf, die in einem Trägerkörper 3 teleskopierbar angeordnet ist.

Am Trägerkörper 3 sind drei Stativbeine 4 verschwenkbar angelenkt, die mit ihren Spitzen jeweils in eine Aufnahmevorrichtung 5 eingreifen, die an jedem der drei Dollyarme 6, 7 und 8 vorgesehen sind. Die Aufnahmevorrichtung kann dabei entsprechend der Bodenspinne nach der DE-PS 2 612 409 ausgebildet sein. D.h. jedes Stativbein 4 weist zwei Stativspitzen auf, deren eine sich in Verlängerung des Stativbeins erstreckt und deren andere in einem Winkel von etwa 45° nach innen läuft, wobei als Aufnahmevorrichtung für die Stativspitzen jeweils eine Rolle mit einer beide Stativspitzen eines Stativbeins 4 gemeinsam abstützenden und führenden Umfangshülle vorgesehen ist. Die Stativspitzen sind ferner mit einer Spannvorrichtung sicherbar. Die Spannvorrichtung ist ein U-förmiger Spannbügel aus gummielastischem Material, dessen Schenkelenden die Achse der Rolle umgreifen und dessen als Handgriff ausgebildetes Mittelstück um einen nach aussen weisenden Spannvorsprung am unteren Ende des jeweiligen Stativbeins 4 spannbar ist.

Die Dollyarme 6, 7 und 8 sind jeweils mit einem Radsatz 9 an ihrem freien Ende versehen, beispielsweise mit Zwillingsrädern. Zwei der Dollyarme, nämlich die Dollyarme 6 und 7 sind um jeweils eine vertikale Achse 10 verschwenkbar an dem zentralen Kernstück 11 des Dolly 1 angelenkt, während der dritte Dollyarm 8 starr an dem Kernstück 11 befestigt ist.

An ihrem oberen Ende ist die Mittelsäule 2 mit einer Aufnahmevorrichtung 12 für die Kamera versehen, und unterhalb der Aufnahmevorrichtung 12 mit einem Lenkradkranz 13.

Der Lenkradkranz 13 ist über Speichen 14 an einer Nabe 15 an der Mittelsäule 2 befestigt. Weiterhin sitzt, wie in Figur 1 gestrichelt dargestellt ist, auf der Mittelsäule 2 ein oberes Zentralzahnrad 16, das mit einem Ritzel 17 kämmt bzw. mit dem Ritzel 17 über einen Zahnriemen verbunden ist. Das Ritzel 17 treibt eine Steuerwelle 18 an, die, was in der Zeichnung nicht näher dargestellt ist, an der Mittelsäule 2 gelagert ist und sich parallel zur Mittelsäule 2 in das zentrale Kernstück 11 erstreckt. Die Steuerwelle 18 ist dabei entsprechend der Mittelsäule 2 teleskopierbar ausgebildet.

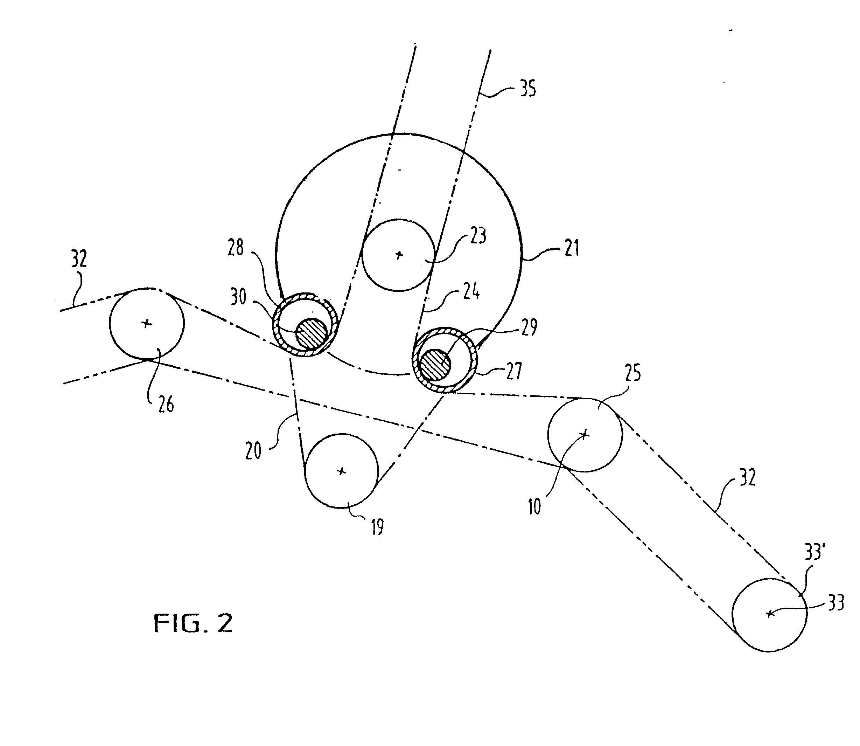

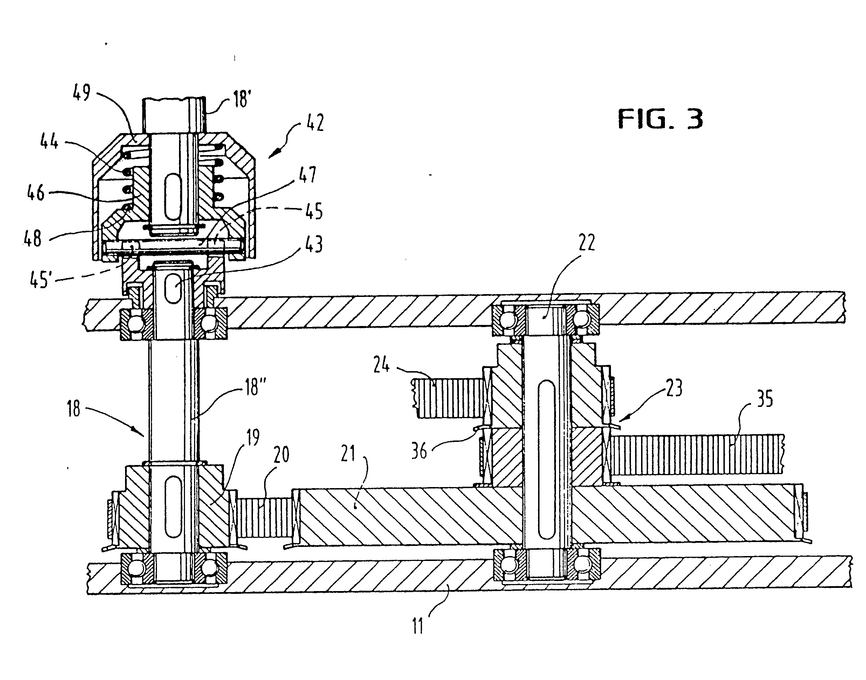

Wie aus Figur 2 und 3 ersichtlich, sitzt an dem unteren Ende der Steuerwelle 18 ein weiteres Ritzel 19, das über einen Zahnriemen 20 ein unteres Zentralzahnriemenrad 21 antreibt, das koaxial zum oberen Zentralzahnriemenrad 16 angeordnet und in dem zentralen Kernstück 11 des Dolly 1 auf einer Welle 22 drehbar gelagert ist. Die Steuerwelle 18 ist dabei auf der dem starren Arm 8 gegenüberliegenden Seite der Mittelsäule 2 auf dem zentralen Kernstück 11 des Dolly 1 angeordnet.

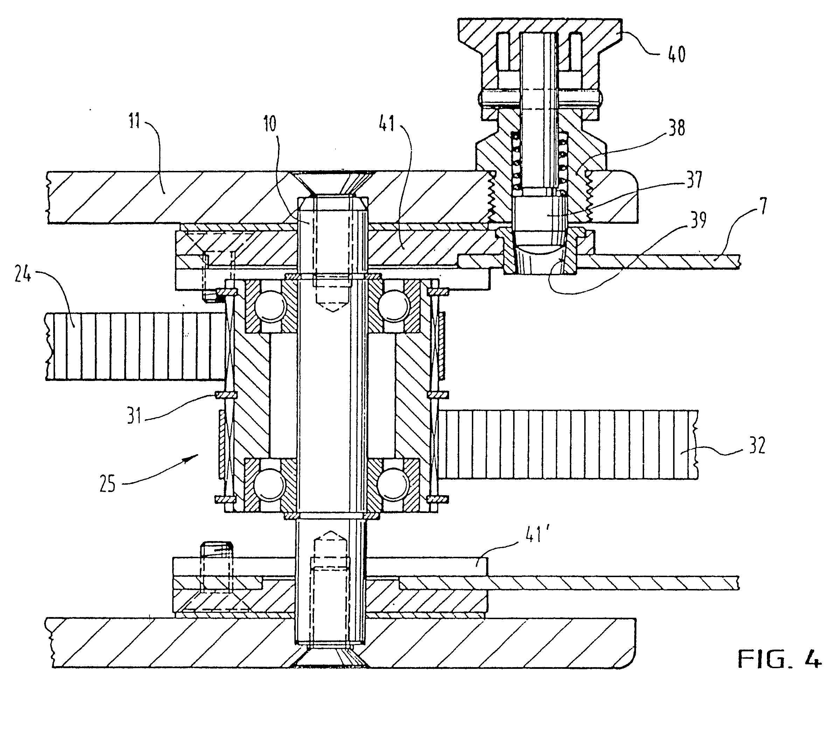

Auf der Welle 22 des unteren Zentralzahnriemenrades 21 ist ein weiteres Zahnrad 23 befestigt, um dessen oberen Teil ein Zahnriemen 24 gelegt ist, der ausser dem Zahnriemenrad 23, wie aus Figur 2 und 4 ersichtlich, zwei weitere Zahnriemenräder 25 und 26 umschlingt.

Die Zahnriemenräder 25 und 26 sitzen jeweils auf einer der vertikalen Klappachsen 10, mit denen die Dollyarme 6 und 7 an dem zentralen Kernstück 11 angelenkt sind. Wie Figur 2 entnehmbar ist, ist der Zahnriemen 24 in der Draufsicht also etwa in Form eines Dreiecks angeordnet, mit dem Zahnriemenrad 23 am unteren Zentralzahnriemenrad 21 und den Zahnriemenrädern 25 und 26 an den beiden Klappachsen 10 an den Spitzen des Dreiecks.

An dem Abschnitt zwischen dem Zahnriemenrad 23 an dem unteren Zentralzahnriemenrad und jedem der beiden Zahnriemenräder 25 und 26 an den Klappachsen 10 der Dollyarme 6 und 7 ist ferner jeweils eine Rolle 27 bzw. 28 zum Spannen des Zahnriemens 24 vorgesehen, die an einen am zentralen Kernstück 11 drehbar gelagerten, in der gewünschten Winkelstellung fixierbaren Exzenten 29 bzw. 30 drehbar gelagert ist (Figur 2).

Der Arbeitsbereich des Zahnriemens 24 an den Zahnriemenrädern 25 und 26 ist jeweils durch eine Bordscheibe 31 begrenzt (Figur 4). An dem unteren Teil jedes Zahnriemenrades 25 bzw. 26 an den Klappachsen 10 der klappbaren Dollyarme 6 und 7 ist jeweils ein weiterer Zahnriemen 32 vorgesehen, der zu einem (in Figur 2 nur für den Arm 7 dargestellten) Zahnriemenrad 33' führt, das auf der am freien Ende des Dollyarms 6 bzw. 7 drehbar gelagerten Welle 33 sitzt, an der die Radsätze 9 aufgehängt sind (Figur 1). Eine weitere Scheibe 34 ist am unteren Ende jedes Zahnriemenrades 25 bzw. 26 für den Zahnriemen 32 vorgesehen.

Jede Klappachse 10 ist durch einen am zentralen Kernstück 11 befestigten vertikalen Bolzen gebildet, der das dem Kernstück 11 zugewandte Ende des kastenförmig ausgebildeten Dollyarms 6 bzw. 7 durchsetzt. Die Zahnriemenräder 24 und 25 sind auf dem Bolzen 10 drehbar gelagert (Figur 4).

Die Lenkung des Radsatzes 9 des starren, nicht klappbaren Dollyarms 8 erfolgt über einen Zahnriemen 35, der einerseits den unteren Teil des am unteren Zentralzahnriemenrad 21 angeordneten Zahnriemenrades 23 und andererseits ein (in der Zeichnung nicht dargestelltes) Zahnriemenrad umschlingt, das auf der Welle 33 am freien Ende des starren Dollyarmes 8 sitzt, welcher den Radsatz 9 trägt. Eine Bordscheibe 36 zwischen dem oberen und dem unteren Teil des am Zentralzahnriemenrad 21 angeordneten Zahnriemenrads 23 dient dazu, den Zahnriemen 24 zur Lenkung der Radsätze der beiden klappbaren Arme 6 und 7 und den Zahnriemen 35 zur Lenkung des Radsatzes 9 des starren, nicht klappbaren Dollyarms 8 voneinander getrennt zu halten (Figur 3).

Damit eine direkte Lenkung möglich ist, d.h. das Übersetzungsverhältnis zwischen dem Lenkradkranz 13 und den die Radsätze 9 tragenden Wellen 33 1:1 ist, entspricht das Untersetzungsverhältnis zwischen dem Ritzel 19 am unteren Ende der Steuersäule 18 und dem unteren Zentralzahnriemenrad 23 dem Übersetzungsverhältnis zwischen dem oberen Zentralzahnriemenrad 16 und dem Ritzel 19 am oberen Ende des Steuerwelle 18. Ferner ist das Übersetzungsverhältnis zwischen dem am unteren Zentralzahnriemenrad 21 angeordneten Zahnriemenrad 23 und den (in Figur 2 nur für den Arm 7 dargestellten) Zahnriemenrädern 33', an den die Radsätze 9 tragenden Wellen 33 jeweils 1:1.

Zur Verriegelung der ausgeklappten Stellung der beiden Arme 6 und 7 des Dolly ist jeweils ein Bolzen 37 vorgesehen, der parallel zur Klappachse 10 verschiebbar in einer auf dem zentralen Kernstück 11 angeordneten Hülse 38 an dem dem freien Ende der Arme 6, 7 zugewandten Ende des zentralen Kernstücks 11 angeordnet und in eine Bohrung 39 in zugehörigen Arm 6, 7 einrastbar ist. An seinem oberen Ende ist der Verriegelungsbolzen 37 mit einem Griffknopf 40 versehen. Weiterhin ist im Bereich der Klappachse 10 jeder der klappbaren kastenförmigen Arme 6 und 7 an seiner Ober- und seiner Unterseite mit einer Verstärkung 41 bzw. 41' versehen.

Damit die beiden Arme 6 und 7 auf den nichtklappbaren, starren Arm 8 des Dolly 1 geklappt werden können, ist das Stativ von dem Dolly 1 abnehmbar ausgebildet, d.h. ohne Zuhilfenahme eines Werkzeugs lösbar.

Dazu sind einerseits die vorstehend geschilderten Aufnahmevorrichtungen 12 vorgesehen und andererseits ist die Steuerwelle 18 in einen oberen Teil 18' mit dem mit dem oberen Zentralzahnriemenrad 16 zusammenwirkendes Ritzel 17 und in einen unteren Teil 18'' mit dem mit dem unteren Zentralzahnriemenrad 21 zusammenwirkendes Ritzel 19 geteilt. Der untere Teil 18'' der Steuerwelle, der das Ritzel 19 trägt, ist im zentralen Kernstück 11 des Dolly 1 drehbar gelagert.

Die beiden Teile 18' und 18'' der Steuerwelle 18 sind über eine Schnellkupplung 42 miteinander verbindbar. Die Schnellkupplung wird durch eine Klaue 43 am oberen Ende des unteren Teils 18'' der Steuerwelle 18 und eine am unteren Ende des oberen Teils 18' der Steuerwelle 18 verschiebbar angeordnete, auf die Klaue 43 zu durch eine Feder 44 belastete Hülse 46 mit einem in die Klauenauswechslungen 45, 45' einrastenden Bolzen 47 gebildet. Die Feder 44 stützt sich einerseits an einer Aussenschulter 48 der Hülse 46 und andererseits an einer sich über die Hülse 46 erstreckenden Kappe 49 ab, die an der Steuerwelle 18 befestigt ist.

Das von dem Dolly 1 abgenommene Stativ und der Dolly 1 mit auf den Arm 8 geklappten Armen 6, 7 sind leicht transportabel, z.B. im Kofferraum eines Autos oder als Fluggepäck. Um das Stativ noch platzsparender transportieren zu können, hat es sich ferner als praktisch erwiesen, den Lenkradkranz 13 mit den Speichen 14 abnehmbar auszubilden, z.B. durch eine Befestigung der Speichen 14 an der Nabe 15 mit jeweils einer unverschiebbaren Flügelschraube, die mit einer schnellzentrierenden, unverlierbaren Mutter zusammenwirkt.

Die vorstehend beschriebenen Zahnriemenantriebe können teilweise oder ganz auch durch andere Transmissionen zur formschlüssigen Drehmomentübertragung ersetzt sein, insbesondere durch einen Kettenantrieb z.B. in Form einer Zahn- oder Rollenkette, wobei die Zahnriemenräder dann durch Kettenräder ersetzt sind. Darüberhinaus können auch Zahnradgetriebe mit ineinander kämmenden Zahnrädern eingesetzt werden, insbesondere zur Drehmomentübertragung von dem Lenkradkranz 13 auf die Steuerwelle 18 und von der Steuerwelle 18 auf die im zentralen Kernstück 11 des Dolly koaxial zum Lenkradkranz 13 angeordnete Welle 22.

## Patentansprüche

1. Film- oder Fernsehkamerastativ auf einem verfahrbaren Untersatz aus einem zentralen Kernstück (11) mit drei Armen (6, 7, 8), die an ihrem freien Ende jeweils mit einem Laufradsatz (9) versehen sind, wobei das Stativ von dem Untersatz abnehmbar ausgebildet ist und zwei der Arme (6 und 7) des Untersatzes an den dritten Arm (8) um parallel zur Mittelsäule (2) verlaufende Klappachsen (10) klappbar ausgebildet sind, dadurch gekennzeichnet, dass die Laufräder über eine Zentrallenkung lenkbar sind, die einen um die Mittelsäule (2) des Stativs angeordneten, daran befestigten Lenkradkranz (13), ein auf der Mittelsäule (2) sitzendes oberes Zentralzahnriemen- oder -kettenrad (16), eine an der Mittelsäule (2) drehbar gelagerte und sich parallel zu dieser erstreckende Steuerwelle (18) mit einem mit dem oberen Zentralzahnriemen- oder -kettenrad (16) zusammenwirkenden Ritzel (17) am oberen Ende und mit einem Ritzel (19) am unteren Ende, ein mit dem unteren Ritzel (19) der Steuerwelle zusammenwirkendes unteres Zentralzahnriemen- oder -kettenrad (21) im zentralen Kernstück (11) des Untersatzes und je einen Zahnriemen- oder Kettenantrieb (32) von dem unteren Zentralzahnriemen- oder -kettenrad (21) zu einem Zahnriemen- oder Kettenrad (33') an den die Laufradsätze (9) tragenden Wellen (33) aufweist, und dass der Zahnriemen- bzw. Kettenantrieb von dem unteren Zentralzahnriemen- bzw. -kettenrad (21) zu den Zahnriemen- bzw. Kettenrädern (33') an den Wellen (33) der Radsätze (9) der beiden Klapparme (6, 7) des Untersatzes (1) jeweils ein zur Klappachse (10) koaxiales Zahnriemen- oder Kettenrad (25 und 26) aufweist, das einerseits mit dem Zahnriemen- oder Kettenrad (33') an der Welle (33) des jeweiligen Laufradsatzes (9) über einen Zahnriemen oder eine Kette (32) und andererseits über einen weiteren Zahnriemen bzw. eine Kette (24) mit einem zum unteren Zentralzahnriemen- oder -kettenrad (21) koaxialen Zahnriemen- oder Kettenrad (23) verbunden ist.

2. Stativ nach Anspruch 1, dadurch gekennzeichnet, dass zwischen dem Lenkradkranz (13) und den die Laufradsätze (9) tragenden Wellen (33) an den Armen (6 bis 8) des Untersatzes (1) ein Übersetzungsverhältnis von 1:1 vorliegt.

3. Stativ nach Anspruch 1 oder 2, dadurch gekennzeichnet, dass das Untersetzungsverhältnis zwischen dem Ritzel (19) am unteren Ende der Steuersäule (18) und dem unteren Zentralzahnriemen- oder -kettenrad (21) dem Übersetzungsverhältnis zwischen dem oberen Zentralzahnriemen- oder -kettenrad (16) und dem Ritzel (17) am oberen Ende der Steuerwelle (18) entspricht.

4. Stativ nach Anspruch 3, dadurch gekennzeichnet, dass das Übersetzungsverhältnis zwischen dem am unteren Zentralzahnriemen- oder -kettenrad (21) angeordneten Zahnriemen- oder Kettenrad (23) und den Zahnriemen- oder Kettenrädern (33') an den die Laufradsätze (9) tragenden Wellen (33) 1:1 ist.

5. Stativ nach einem der Ansprüche 1 bis 4 dadurch gekennzeichnet, dass an dem Abschnitt des Zahnriemens oder der Kette (24) zwischen dem am unteren Zentralzahnriemen- oder -kettenrad (21) angeordneten Zahnriemen- oder Kettenrad (23) und jedem der beiden an den Klappachsen (10) angeordneten Zahnriemen- oder Kettenräder (25 und 26) jeweils eine Spannrolle (27 bzw. 28) vorgesehen ist.

6. Stativ nach einem der Ansprüche 1 bis 5, dadurch gekennzeichnet, dass ein Zahnriemen oder eine Kette (35) vorgesehen ist, der bzw. die das am unteren Zentralzahnriemen- oder -kettenrad (21) angeordnete Zahnriemen- oder Kettenrad (23) sowie das an der Welle (33) des Laufradsatzes des dritten, starren Armes (8) angeordnete Zahnriemen- oder Kettenrad umschlingt.

7. Stativ nach einem der vorstehenden Ansprüche, dadurch gekennzeichnet, dass zur Verriegelung der ausgeklappten Stellung der beiden Arme (6 und 7) des Untersatzes (1) jeweils ein Bolzen (37) vorgesehen ist, der parallel zur Klappachse (10) verschiebbar an dem dem freien Ende des Armes (6, 7) zugewandten Ende des zentralen Kernstücks (11) angeordnet und in eine Bohrung (39) in dem Arm (6, 7) einrastbar ist.

8. Stativ nach einem der vorhergehenden Ansprüche, dadurch gekennzeichnet, dass die Steuerwellle (18) zweigeteilt ist, wobei der obere Teil (18') mit dem mit dem oberen Zentralzahnriemen- oder -kettenrad (16) zusammenwirkenden Ritzel (17) mit dem an zentralen Kernstück (11) des Untersatzes (1) drehbar gelagerten unteren Teil (18") mit dem mit dem unteren Zentralzahnriemen- oder -kettenrad (21) zusammenwirkenden Ritzel (19) über eine Schnellkupplung (42) verbunden ist.

9. Stativ nach Anspruch 8, dadurch gekennzeichnet, dass die Schnellkupplung durch eine Klaue (43) am oberen Ende des unteren Teils (18") der Steuerwelle (18) und eine am unteren Ende des oberen Teils (18') der Steuerwelle (18) verschiebbar angeordnete, auf die Klaue (42) zu federbelastete (Feder 44) Hülse (46) mit einem in die Klauenausnehmungen (45, 45') einrastenden Bolzen (47) gebildet wird.

10. Stativ nach einem der vorstehenden Ansprüche, dadurch gekennzeichnet, dass das Stativ ein Dreibeinstativ ist und die Arme (6 bis 8) des Untersatzes (1) Aufnahmevorrichtungen (12) für die Stativspitzen der Stativbeine (4) aufweisen.

## Claims

1. A movie or television camera pedestal on a movable dolly comprising a central core piece (11) with three arms (6, 7, 8) each provided at its free end with a wheelset (9), the pedestal being removable from the dolly and two arms (6 and 7) of the dolly being collapsible against the third arm (8) about folding axes (10) extending parallel to the central pillar (2), characterized in that the wheels can be steered via a central steering means having a steering wheel rim (13) disposed about the central pillar (2) of the pedestal and attached thereto, an upper central toothed belt or chain, wheel (16) seated on the central pillar (2), a control shaft (18) pivoted to the central pillar (2), extending parallel thereto and having at the upper end a pinion (17) cooperating with the upper central toothed belt or chain wheel (16), and at the lower end a pinion (19), a lower central toothed belt or chain wheel (21) in the central core piece (11) of the dolly cooperating with the lower pinion (19) of the control shaft, and a toothed belt or chain drive (32) from the lower central toothed belt or chain wheel (21) to a toothed belt or chain wheel (33') on each shaft (33) bearing the wheelsets (9), and in that the toothed belt or chain drive from the lower central toothed belt or chain wheel (21) to the toothed belt or chain wheels (33') on the shafts (33) of the wheelsets (9) of the two folding arms (6, 7) of the dolly (1) each has a toothed belt or chain wheel (25 and 26) coaxial to the folding axis (10) and connected, on the one hand, with the toothed belt or chain wheel (33') on the shaft (33) of the particular wheelset (9) via a toothed belt or chain (32) and, on the other hand, via a further toothed belt or chain (24) with a toothed belt or chain wheel (23) coaxial to the lower central toothed belt or chain whell (21).

2. A pedestal according to claim 1, characterized in that a transmission ratio of 1:1 exists between the steering wheel rim (13) and the shaft (33) bearing the wheelsets (9) on the arms (6 to 8) of the dolly (1).

3. A pedestal according to claim 1 or 2, characterized in that the transmission ratio between the pinion (19) at the lower end of the control pillar (18) and the lower central toothed belt or chain wheel (21) corresponds to the transmission ratio between the upper central toothed belt or chain wheel (16) and the pinion (17) at the upper end of the control shaft (18).

4. A pedestal according to claim 3, characterized in that the transmission ratio between the toothed belt or chain wheel (23) disposed at the lower central toothed belt or chain wheel (21) and the toothed belt or chain wheels (33') on the shafts (33) bearing the wheelsets (9) is 1:1.

5. A pedestal according to any of claims 1 to 4, characterized in that a tension roller (27, 28) is provided on the portion of the toothed belt or chain (24) between the toothed belt or chain wheel (23) disposed on the lower central toothed belt or chain wheel (21) and each of the two toothed belt or chain wheels (25 and 26) disposed on the folding axes (10).

6. A pedestal according to any of claims 1 to 5, characterized in that a toothed belt or chain (35) is provided which winds around the toothed belt or chain wheel (23) disposed on the lower central toothed belt or chain wheel (21), and around the toothed belt or chain wheel disposed on the shaft (33) of the wheelset of the third, rigid arm (8).

7. A pedestal according to any of the above claims, characterized in that a bolt (37) is provided in each case for locking the open position of the two arms (6 and 7) of the dolly (1), said bolt being displaceably disposed parallel to the folding axis (10) on the end of the central core piece (11) facing the free end of the arm (6, 7), and being adapted to engage a bore (39) in the arm (6, 7).

8. A pedestal according to any of the above claims, characterized in that the control shaft (18) is bipartite, whereby the upper part (18') having the pinion (17) cooperating with the upper central toothed belt or chain wheel (16) is connected via a quick coupling (42) with the lower part (18'') pivoted to the central core piece (11) of the dolly (1) and having the pinion (19) cooperating with the lower central toothed belt or chain wheel (21).

9. A pedestal according to claim 8, characterized in that the quick coupling is formed by a carrier (43) at the upper end of the lower part (18'') of the control shaft (18) and a sleeve (46) displaceably disposed on the lower end of the upper part (18') of the control shaft (18) and spring-loaded (spring 44) toward the carrier (43) with a bolt (47) engaging the carrier recesses (45, 45').

10. A pedestal according to any of the above claims, characterized in that the pedestal is a tripod pedestal and the arms (6 to 8) of the dolly (1) have receiving means (12) for the pedestal tips of the pedestal legs (4).

## Revendications

1. Support de caméra de cinéma ou de télévision monté sur un socle roulant constitué d'une partie centrale (11) présentant trois bras (6, 7, 8) qui sont chacun munis d'un jeu de roulettes (9), le support étant amovible du socle et deux des bras (6 et 7) étant rabbatables contre le troisième bras (8) sur des axes de rabattement (10) parallèles à la colonne centrale (2), caractérisé en ce que les roulettes sont orientables par une direction centrale qui présente une couronne de direction (13) disposée autour de la colonne centrale (2) du support et fixées à celle-ci, une roue centrale supérieure à courroie dentée ou à chaîne (16), située sur la colonne centrale (2), un arbre de commande (18) pivotant sur la colonne centrale et s'étendant parallèlement à celle-ci, avec un pi-

gnon concourant avec la roue centrale supérieure à courroie dentée ou à chaîne dentée (16) à l'extrémité supérieure et avec un pignon (19) à l'extrémité inférieure, une roue centrale inférieure à courroie dentée ou à chaîne dentée (21) concourant avec le pignons inférieur (19) de l'arbre de commande dans la partie centrale (11) du socle et respectivement une transmission à courroie dentée ou à chaîne dentée (32) de la roue centrale inférieure à courroie dentée ou à chaîne dentée (21) vers les roues à courroie dentée ou à chaîne dentée (33′) sur les arbres (33) portant les jeux de roulettes (9), et en ce que la transmission à courroie dentée ou à chaîne dentée présente, de la roue centrale inférieure à courroie dentée ou à chaîne dentée (21) vers les roues à courroies dentées ou à chaînes dentées (33′) sur les arbres (33) des jeux de roulettes (9) des deux bras rabattables (6, 7) du socle (1), une roue à courroie dentée ou à chaîne dentée (25 et 26) disposée coaxialement par rapport à l'axe de rabattement (10), roue qui est reliée d'une part avec la roue à courroie dentée ou à chaîne dentée (33′) sur l'arbre (33) de chaque jeu de roulettes (9) par une courroie dentée ou une chaîne (32) et d'autre part avec une roue à courroie dentée ou à chaîne dentée (23) coaxiale à la roue centrale inférieure à courroie dentée ou à chaîne dentée (21) par une autre courroie dentée ou par une chaîne (24).

2. Support selon la revendication 1, caractérisé en ce que le rapport de transmission entre la couronne de direction (13) et les arbres (33) portant les jeux de roulettes (9) sur les bras (6 à 8) du socle (1) est de 1:1.

3. Support selon la revendication 1 ou 2, caractérisé en ce que le rapport de transmission entre le pignon (19) à l'extrémité inférieure de la colonne de commande (18) et la roue centrale inférieure à courroie dentée ou à chaîne dentée (21) correspond au rapport de transmission entre la roue centrale supérieure à courroie dentée ou à chaîne dentée (16) et le pignon (17) à l'extrémité supérieure de l'arbre de commande (18).

4. Support selon la revendication 3, caractérisé en ce que le rapport de transmission entre la roue à courroie dentée ou à chaîne (23) disposée sur la roue centrale inférieure à courroie dentée ou à chaîne dentée (21) et les roues à courroie dentée ou à chaîne (33′) sur les arbres (33) portant les jeux de roulettes (9) est de 1:1.

5. Support selon l'une des revendications 1 à 4, caractérisé en ce qu'une poulie de tension (27 ou 28) est prévue respectivement sur la section de la courroie dentée ou de la chaîne (24) entre la roue à courroie dentée ou à chaîne (23) disposée sur la roue centrale inférieure à courroie dentée ou à chaîne dentée (21) et sur chacune des roues à courroie dentée ou à chaîne (25 et 26) disposées sur les axes de rabattement (10).

6. Support selon l'une des revendications 1 à 5, caractérisé en ce qu'il est prévu une courroie dentée ou une chaîne (35) qui fait une boucle sur la roue à courroie dentée ou à chaîne (23) disposée sur la roue centrale inférieure à courroie dentée ou à chaîne dentée (21) ainsi que sur la roue à courroie dentée ou à chaîne disposée sur l'arbre (33) du jeu de roulettes du troisième bras fixe (8).

7. Support selon l'une des revendications précédentes, caractérisé en ce que pour bloquer la position dépliée des deux bras (6 et 7) du socle (1), il est prévu pour chaque bras une cheville (37) coulissant parallèlement à l'axe de rabattement (10), située à l'extrémité de la partie centrale (11) orientée vers l'extrémité libre du bras (6, 7) et venant s'encliqueter dans un alésage (39) dans le bras (6, 7).

8. Support selon l'une des revendications précédentes, caractérisé en ce que l'arbre de commande (18) est en deux parties, la partie supérieure (18′) avec le pignon (17) concourant avec la roue centrale supérieure à courroie dentée ou à chaîne dentée (16) étant reliée à la partie inférieure (18″), pivotant sur la partie centrale (11) du socle (1), avec le pignon (19) concourant avec la roue centrale inférieure à courroie dentée ou à chaîne dentée (21).

9. Support selon la revendication 8, caractérisé en ce que le rapport express est formé par une griffe (43) sur l'extrémité supérieure de la partie inférieure (18″) de l'arbre de commande (18) et par une douille (46) chargée par ressort (ressort 44), disposée sur la griffe (42) à l'extrémité supérieure de la partie inférieure (18″) de l'arbre de commande (18), avec une cheville (47) venant s'encliqueter dans les creux de la griffe (45, 45′).

10. Support selon l'une des revendications précédentes, caractérisé en ce que le support est une trépied et que les bras (6 à 8) du socle (1) présentent des dispositifs de réception (12) pour les pointes des pieds du support (4).

FIG. 1

FIG. 2

EP 0 176 765 B1

# FIG. 3

FIG. 4

EP 0 176 765 B1